# EUROPÄISCHE PATENTSCHRIFT

(11) **EP 2 916 988 B1**
(45) Veröffentlichungstag und Bekanntmachung des Hinweises auf die Patenterteilung: **01.02.2017**
(21) Anmeldenummer: 13788877.2
(22) Anmeldetag: 25.10.2013
(51) Int. Cl.: B23K 11/16, B23K 11/25, B23K 11/30, B23K 11/36, B23K 101/12, B23K 103/04, B23K 11/06

(54) **VERFAHREN UND VORRICHTUNG ZUM ROLLNAHTSCHWEISSEN VON BEHÄLTERZARGEN**
METHOD AND DEVICE FOR ROLLER SEAM WELDING OF CAN BODIES
PROCÉDÉ ET APPAREIL POUR LE SOUDAGE À LA MOLETTE DE CORPS DE BOÎTE

(30) Priorität: 06.11.2012 CH 22602012
(43) Veröffentlichungstag der Anmeldung: 16.09.2015
(73) Patentinhaber: Soudronic AG, 8962 Bergdietikon (CH)
(72) Erfinder: DIETERICH, Daniel, CH-8335 Hittnau (CH); MÜLLER, Willi, CH-8966 Oberwil-Lieli (CH)
(74) Vertreter: Schalch, Rainer
(86) Internationale Anmeldenummer: PCT/CH2013/000183
(87) Internationale Veröffentlichungsnummer: WO 2014/071535

(56) Entgegenhaltungen:
- EP-A1- 2 269 760
- BE-A- 436 011

## Beschreibung

### Gebiet der Erfindung

Die Erfindung betrifft ein Verfahren zum Rollnahtschweissen der überlappend oder auf Stoss positionierten Kanten einer Folge von Behälterzargenrohlingen, wodurch eine Folge von Behälterzargen gebildet wird, wobei während der Schweissung eines Behälterzargenrohlings jeweils mindestens ein für die Schweissqualität relevanter Schweissparameter erfasst und ausgewertet wird. Ferner betrifft die Erfindung eine Rollnahtschweissvorrichtung mit Schweissrollen, einer Transporteinrichtung und einer Kalibriereinrichtung zur Zuführung von Behälterzargenrohlingen mit überlappend oder auf Stoss positionierten Kanten zu den Schweissrollen der Vorrichtung und mit einer Steuerung, welche bei der Schweissung einer Behälterzarge zur Erfassung und Auswertung mindestens eines für die Qualität der erzeugten Schweissnaht relevanten Schweissparameters ausgestaltet ist.

### Hintergrund

Es ist bekannt, die Längsnaht von zuvor gerundeten Behälterzargenrohlingen, insbesondere Dosenzargenrohlingen, mittels Rollnahtschweissung zu verschweissen. Die Schweissnaht von Behältern und insbesondere von Dosen für Lebensmittel oder für Aerosole muss hohe Qualitätsanforderungen erfüllen. Neben der Flüssigkeits- und Luftdichtigkeit der Schweissnaht muss diese auch für eine einwandfreie Beschichtung mit einem Beschichtungsmaterial für die Innenbeschichtung und Aussenbeschichtung der Behälter geeignet sein. Anstelle von verzinntem Stahlblech (Weissblech), das bekanntermassen für die Behälter verwendet wird, kann auch der Einsatz von zum Beispiel elektrolytisch verchromtem Stahlblech (ECCS; Electrolytically Chromium Coated Steel) von der Verpackungsindustrie gewünscht werden, was höhere Anforderungen an das Schweissverfahren stellt. Es ist ferner ein Bestreben, die Schweissgeschwindigkeit weiter zu erhöhen. In EP-A 2 243 584 wird zur Verbesserung der Schweissqualität vorgeschlagen mindestens eine Störgrösse bei der Schweissung zu erfassen und eine mechanische oder elektrische Stellgrösse bei der Schweissung zu verändern, um den Einfluss der Störgrösse zu vermindern.

### Darstellung der Erfindung

Die Aufgabe der vorliegenden Erfindung liegt in der Verbesserung der Schweissqualität beim Rollnahtschweissen von Behälterzargen. Dadurch soll die Verwendung anspruchsvoll zu schweissender Bleche und/oder eine Erhöhung der Schweissgeschwindigkeit ermöglicht werden.

Diese Aufgabe wird dadurch gelöst, dass bei mindestens einer Behälterzarge der Folge von Behälterzargen die zuvor erzeugte Schweissnaht einer zweiten Rollnahtschweissung unterzogen wird, wobei die Schweisskraft der zweiten Schweissung in Abhängigkeit von dem mindesten einen erfassten Schweissparameter eingestellt wird.

Es zeigt sich, dass durch die zweite Schweissung mit einer Schweisskraft, die auf einem bei der ersten Schweissung der Schweissnaht der Behälterzarge erfassten Schweissparameter beruht, auch bei hohen Schweissgeschwindigkeiten qualitativ sehr gute Längsnähte von Behältern erzeugbar sind, wobei auf diese Weise insdere auch nicht verzinnte Bleche und z.B. ECCS-Bleche mit hoher Qualität der Schweissnaht verschweissbar sind.

Bevorzugt erfolgen die beiden Schweissungen direkt nacheinander im selbem Durchlauf des Behälterrohlings und der Behälterzarge durch eine Schweissmaschine. Alternativ kann eine zweite Schweissmaschine der ersten Schweissmaschine nachgeschaltet sein. Dabei wird die von den ersten Schweissrollen geschweisste Behälterzarge von einem Transportmittel erfasst und von diesem zu den zweiten Schweissrollen transportiert. Damit können auch zwei räumlich voneinander getrennte Schweissmaschinen das Verfahren ausführen.

Bevorzugt wird als Schweissparameter die Schweissnahttemperatur bei der bzw. nach der ersten Schweissung erfasst. Dies ist mit den bekannten Schweissmonitoren auf einfache Weise möglich. Alternativ oder zusätzlich wird als Schweissparameter der Energiewert aus dem Spannungsabfall zwischen den ersten Schweisselektroden und dem Schweissstrom erfasst. Werden beide Schweissparameter erfasst, so ist es bevorzugt, die Schweisskraft der zweiten Schweisselektroden in Abhängigkeit von beiden Schweissparametern eingestellt wird. Bevorzugt wird elektrolytisch verchromtes Stahlblech (ECCS; Electrolytically Chromium Coated Steel) geschweisst.

Die Schweisskraft wird bei der zweiten Schweissung in Abhängigkeit von dem erfassten Schweissparameter geringer eingestellt als bei der ersten Schweissung oder gleich wie bei der ersten Schweissung oder höher als bei der ersten Schweissung. Weiter ist es bevorzugt, dass die Einstellung der zweiten Schweisskraft in Abhängigkeit vom erfassten Schweissparameter durch eine Reihe von Testzargen ermittelt wird, die mit erster und zweiter Schweissung geschweisst und danach visuell und mechanisch auf deren Schweissnahtqualität geprüft werden.

Aufgabe der Erfindung ist es ferner eine verbesserte Rollnahtschweissvorrichtung zu schaffen.

Diese Aufgabe wird bei der eingangs genannten Rollnahtschweissvorrichtung dadurch gelöst, dass die Rollnahtschweissvorrichtung einen zweiten Satz von Schweissrollen aufweist, welcher in Richtung des Behälterzargentransports auf die ersten Schweissrollen folgt, und dass die Steuerung dazu ausgestaltet ist, die Schweisskraft des zweiten Satzes von Schweissrollen für eine Behälterzarge in Abhängigkeit von dem erfassten Schweissparameter einzustellen.

Es zeigt sich, dass durch den zweiten Satz von Schweissrollen, der eine zweite Schweissung mit einer Schweisskraft erlaubt, die auf einem bei der ersten Schweissung der Schweissnaht des Behälterzargenrohlings erfassten Schweissparameter beruht, auch bei hohen Schweissgeschwindigkeiten und speziellen Blechsorten qualitativ sehr gute Längsnähte von Behältern erzeugbar sind.

Bevorzugt ist die Rollnahtschweissvorrichtung so ausgestaltet, dass eine von den ersten Schweissrollen geschweisste Behälterzarge beim Austritt aus den ersten Schweissrollen von den zweiten Schweissrollen erfassbar ist. Alternativ kann ein Transportmittel vorgesehen sein, das zur Erfassung der von den ersten Schweissrollen geschweissten Behälterzarge und zu deren Transport zu den zweiten Schweissrollen ausgestaltet ist.

Bevorzugt ist die Rollnahtschweissvorrichtung so ausgestaltet, dass sie als Schweissparameter die Schweissnahttemperatur im Verlauf des ersten Schweissvorgangs erfasst. Alternativ kann die Rollnahtschweissvorrichtung so ausgestaltet sein, dass sie zur Erfassung des Energiewerts aus dem Spannungsabfall zwischen den ersten Schweisselektroden und dem Schweissstrom als Schweissparameter ausgestaltet ist.

Bei einer weiteren Variante kann die Rollnahtschweissvorrichtung so ausgestaltet sein, dass sie zur Erfassung von zwei Schweissparametern ausgestaltet ist, wobei als ein erster Schweissparameter die Schweissnahttemperatur erfassbar ist und als ein zweiter Schweissparameter der Energiewert aus dem Spannungsabfall zwischen den ersten Schweisselektroden und dem Schweissstrom erfassbar ist, und wobei von der Rollnahtschweissvorrichtung die Schweisskraft der zweiten Schweisselektroden in Abhängigkeit von beiden Schweissparametern einstellbar ist.

Dokument EP-A-2 269 760, das als nächstliegender Stand der Technik angesehen wird, offenbart eine Rollnachtschweissvorrichtung, die alle Merkmale des Oberbegriffs des Anspruchs 1 aufweist.

### Kurze Beschreibung der Zeichnung

Weitere Ausgestaltungen, Vorteile und Anwendungen der Erfindung ergeben sich aus den abhängigen Ansprüchen und aus der nun folgenden Beschreibung anhand der Figuren. Dabei zeigt
Figur 1 schematisch eine Rollnahtschweissvorrichtung und das Vorgehen gemäss Stand der Technik;
Figur 2 in ebenfalls schematischer Darstellung das Vorgehen gemäss der Erfindung bzw. eine Rollnahtschweissvorrichtung gemäss der Erfindung;

### Wege zur Ausführung der Erfindung

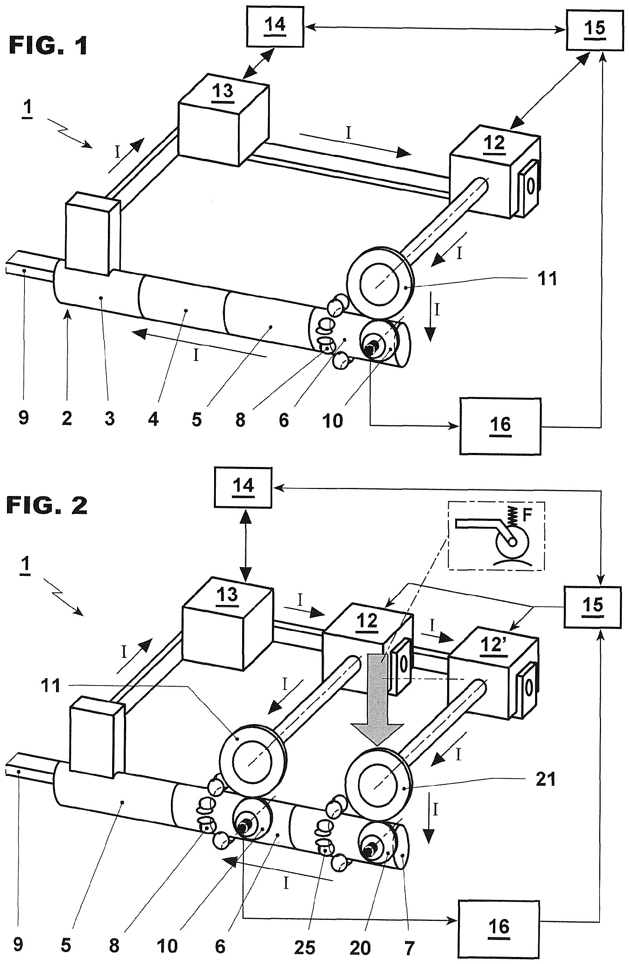

Figur 1 zeigt das Vorgehen beim Schweissen von Behälterzargen, insbesondere von Dosen, nach Stand der Technik. Die Schweissvorrichtung 1 weist Schweissrollen 10 und 11 auf. Die untere Schweissrolle 10, die von der jeweiligen Zarge umgeben ist, die aber in der Zeichnung zur besseren Erläuterung sichtbar dargestellt ist, wie wenn die Zarge durchsichtig wäre, ist an einem nicht dargestellten Unterarm der Schweissmaschine gelagert. Die obere Schweissrolle 11 ist angetrieben drehbar gelagert und die Kraft, mit welcher sie auf die untere Schweissrolle gepresst wird ist manuell einstellbar, um die Schweisskraft einstellen zu können. Der Antrieb und die Schweisskrafteinstellung durch eine entsprechende Anordnung sind mit dem Kasten 12 dargestellt. Die Folge 2 von Behälterzargenrohlingen 3 bis 6, die von einer nicht dargestellten Rundmaschine gebildet worden sind, wird entlang einer sogenannten Z-Schiene 9 der Schweissmaschine in Richtung auf die Schweissrollen 10 und 11 transportiert. Die Dosenzargenrohlinge der Folge 2 werden dabei mit geringem Abstand voneinander entlang der Z-Schiene 9 transportiert, wobei die Transporteinrichtung - abgesehen von der Z-Schiene 9 - da dem Fachmann bekannt, hier nicht dargestellt wird. Vor den Schweissrollen 10, 11 ist in der Regel ein Kalibrierwerkzeug 8 vorgesehen, welches nur schematisch dargestellt ist. Die Z-Schiene 9, welche die zu verschweissenden Längskanten der Behälterzargen in Überlappung bringt und das Kalibrierwerkzeug 8 bereiten die Behälterzargenrohlinge für die Schweissung so vor, dass die Kantenlage für die Schweissung korrekt ist und während des Schweissvorgangs erhalten bleibt. Die Längsnaht der Behälterzarge 6 wird in der Figur 1 geschweisst und diese Zarge verlässt nachfolgend die Schweissmaschine als Behälterzarge und wird mit den dem Fachmann bekannten Schritten zum fertigen Behälter weiter verarbeitet. Die Zargen 3, 4 und 5 sind noch Rohlinge mit unverschweissten Kanten.

Anstelle einer Überlappschweissung von überlappenden Kanten könnte auch eine Stumpfschweissung von aneinander anliegenden Kanten erfolgen, wobei dann die Z-Schiene durch eine sogenannte S-Schiene ersetzt ist.

Die untere Schweissrolle 10 ist in der Regel um eine starr gelagerte Drehachse drehbar, die obere Schweissrolle 11 ist federnd und angetrieben drehbar gelagert und erlaubt die Einstellung der Schweisskraft mittels der erläuterten Antriebseinrichtung und Schweisskrafteinstelleinrichtung 12, die mit der Steuerung 15 der Schweissmaschine verbunden ist. Der von einer Schweissstromquelle 14 mit einem Schweisstransformator 13 bereit gestellte Schweissstrom I wird über Stromschienen zu der oberen Schweissrolle 11 geführt, fliesst über die zu verschweissenden Kanten des Zargenrohlings zur unteren Schweissrolle 10 und wird über den nicht dargestellten Unterarm der Schweissmaschine und weitere Stromschienen wieder zum Schweissstromtransformator 13 geführt. Für die Steuerung der Schweissmaschine ist die erwähnte Steuerung 15 vorgesehen. Ein sogenannter Schweissmonitor 16, der Teil der Steuerung 15 sein kann, kann Daten der Schweissung erfassen und an die Steuerung 15 abgeben. Dies ist bekannt.

Figur 2 zeigt in ähnlich schematischer Darstellung wie Figur 1 das Vorgehen gemäss der Erfindung. Gleiche Bezugsziffern wie in Figur 1 sind für identische oder funktionsgleiche Elemente verwendet. Es sind wiederum die Schweissrollen 10 und 11 vorgesehen, welche den Dosenzargenrohling 6 schweissen. Eine bereits durch die Schweissrollen 10, 11 geschweisste Dosenzarge hat diese Schweissrollen bereits verlassen. Gemäss der Erfindung folgt eine zweite Schweissung der jeweils bereits geschweissten Behälterzarge, hier die Schweissung der bereits geschweissten Dosenzarge 7. Dazu sind die Schweissrollen 20 und 21 vorgesehen. Die zweite Schweissung erfolgt mit einer Schweisskraft, die von einem Schweissparameter der ersten Schweissung abgeleitet wird.

In dem dargestellten Ausführungsbeispiel sind die Schweissrollen 20 und 21 direkt auf die ersten Schweissrollen 10 und 11 folgend angeordnet. Eine zwischen den ersten Schweissrollen 10, 11 geschweisste Zarge 7 gelangt somit in derselben Schweissmaschine direkt anschliessend an die ersten Schweissrollen 10, 11 zwischen die zweiten Schweissrollen 20 und 21 ohne die Schweissmaschine zu verlassen. Es können dazu aussen an der Zarge angreifende Transportmittel 25 ähnlich oder identisch zu Kalibrierwerkzeugen vorgesehen sein, welche die Dosenzargen nach der ersten Schweissung zur zweiten Schweissung fördern. Dies kann unnötig sein, wenn die zweiten Schweissrollen so nahe zu den ersten Schweissrollen angeordnet sind, dass die von den ersten Schweissrollen 10, 11 geschweisste Dosenzarge beim Verlassen dieser Rollen bereits zwischen die zweiten Schweissrollen 20, 21 gelangt, so dass sie von diesen für den weiteren Transport übernommen wird. In diesem Fall ist der Abstand der beiden Schweissrollenpaare kleiner als die Höhe einer Behälterzarge.

Alternativ kann auf die erste Schweissmaschine mit den ersten Schweissrollen direkt eine zweite Schweissmaschine folgen, welche die zweiten Schweissrollen aufweist und welche von der Steuerung entsprechend betrieben wird, dass die zweite Schweissung in Abhängigkeit von dem mindestens einen Schweissparameter erfolgt. In diesem Fall ist zwischen der ersten und der zweiten Schweissmaschine eine Förderanordnung vorgesehen, welche die Zargen vom Ausgang der ersten Schweissmaschine zum Eingang der zweiten Schweissmaschine fördert. Solche Förderanordnungen sind dem Fachmann bekannt.

Die zweite obere Schweissrolle 21 ist drehend angetrieben und ihre Anpresskraft an die zweite untere Schweissrollen 20 ist durch die Steuerung 15 einstellbar. Dies wird durch die Anordnung 12' dargestellt, die grundsätzlich gleich aufgebaut ist, wie die bekannte Anordnung 12. Zur Erläuterung, dass mit der Anordnung 12' die Schweisskraft einstellbar ist, ist in der Figur 2 ein mit der Anordnung 12' verbundener grauer Pfeil in Kraftrichtung der Schweisskraft dargestellt. Zu diesem Pfeil gehört weiter ein Kasten, der in symbolhafter Darstellung die obere Schweissrolle zeigt, die von einer Feder mit einer Kraft F beaufschlagt wird. Diese Darstellung soll das Verständnis erleichtern. Die zweite untere Schweissrolle 20 ist ebenfalls am nicht dargestellten Unterarm der Schweissmaschine drehbar befestigt. Sie ist in der Zeichnung als sichtbar dargestellt, obschon sie von der Zarge umgeben und daher nicht sichtbar ist. Der Schweissmonitor 16 ermittelt auf dem Fachmann bekannte Weise mindestens einen Schweissparameter, der als Indikator für die Schweissqualität bei der ersten Schweissung mit den Schweissrollen 10, 11 dient. Aus diesem Schweissparameter wird die Schweisskrafteinstellung für die zweite Schweissung mittels der Schweissrollen 20 und 21 abgeleitet. Nachfolgend wird dafür ein Beispiel gegeben:
Die erste Schweissung erfolgt bei einem Beispiel bei einer Behälterzarge aus DR8-Material mit einer Schweisskraft von 50 daN und einem Schweissstrom von 4500 A. Von der Steuerung bzw. dem Monitor wird als Schweissparameter die Nahttemperatur erfasst. Dies kann z.B. durch eine Temperaturmessung in geringem Abstand nach den Schweissrollen erfolgen und ist bei bekannten Schweissmonitoren bereits als Messung bekannt. Als zweiter Schweissparameter kann der Energiewert aus dem Spannungsabfall zwischen den Schweisselektroden und dem Strom im Schweisskreis erfasst werden. Einer dieser Schweissparameter oder beide Schweissparameter werden dazu benützt, die Schweisskraft der zweiten Schweissung einzustellen. Dies kann ebenfalls manuell erfolgen, indem eine Anzeige die einzustellende Schweisskraft angibt oder die Schweisskraft der zweiten Schweissrollen kann durch eine Einstellvorrichtung automatisch eingestellt werden, z.B. elektromotorisch, pneumatisch oder magnetisch.

Die Schweisskraft der zweiten Schweissung kann in Abhängigkeit von einem Schweissparameter oder von den beiden Schweissparametern der ersten Schweissung gleich wie bei der ersten Schweissung oder grösser als bei der ersten Schweissung oder kleiner als bei der ersten Schweissung eingestellt werden. So kann die Schweisskraft in dem genannten Beispiel für die zweite Schweissung kleiner als 50 daN eingestellt werden und kann vorzugsweise im Bereich von 25 daN oder 45 daN eingestellt werden. Oder die Schweisskraft wird auch für die zweite Schweissung auf 50 daN eingestellt. Oder die Schweisskraft wird auf mehr als 50 daN eingestellt, z.B. im Bereich von 55 bis 70 daN. Dies kann sowohl bei einer manuellen Einstellung der zweiten Schweisskraft als auch bei der automatischen Einstellung der zweiten Schweisskraft erfolgen. Die Auswahl, ob die zweite Schweissung mit tieferer, höherer oder gleicher Schweisskraft erfolgen soll, um ein optimales Schweissergebnis am Ende der zweiten Schweissung zu erhalten, kann durch Versuche an einer Reihe von Testzargen ermittelt werden, bei denen nach der zweiten Schweissung die Schweissnahtqualität ermittelt wird. Dies erfolgt auf bekannte Weise einerseits durch visuelle Kontrolle der Schweissnaht und andererseits durch ein Aufreissen der Naht. Mit Testzargen wird für verschiedene Werte des Schweissparameters (Schweissnahttemperatur und/oder Energiewert aus dem Spannungsabfall zwischen den ersten Schweisselektroden und dem Schweissstrom) ermittelt ob bei der zweiten Schweissung ein tieferer Wert oder höherer Wert oder gleicher Wert für die Schweisskraft der Testzargen das Schweissergebnis verbessert. Ist ein Wert für die Schweisskraft ermittelt worden, so kann dieser für eine Serie von Zargen verwendet werden. Es kann auch während der Schweissung einer Serie zufällig oder in periodischen Abständen eine solche Ermittlung erfolgen. Natürlich können die Schweissparameterwerte und Schweisskraftwerte in einer Tabelle gespeichert und bei der erneuten Schweissung von gleichem oder ähnlichem Blechmaterial wieder aufgerufen werden, so dass dann auf eine erneute Ermittlung des Wertes der zweiten Schweisskraft in Abhängigkeit vom Schweissparameter verzichtet werden kann, da auf die schon zuvor ermittelten Werte zurück gegriffen werden kann. Besonders vorteilhaft ist der Einsatz der vorliegenden Erfindung bei Behälterzargen, die aus elektrolytisch verchromtem Stahlblech (ECCS; Electrolytically Chromium Coated Steel) hergestellt werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zum Rollnahtschweissen der überlappend oder auf Stoss positionierten Kanten einer Folge (2) von Behälterzargenrohlingen (3 - 7), wodurch eine Folge von Behälterzargen gebildet wird, wobei während der Schweissung eines Behälterzargenrohlings jeweils mindestens ein für die Schweissqualität relevanter Schweissparameter erfasst und ausgewertet wird,
**dadurch gekennzeichnet, dass**
- bei mindestens einer Behälterzarge (7) der Folge von Behälterzargen die zuvor erzeugte Schweissnaht einer zweiten Rollnahtschweissung unterzogen wird,
- wobei die Schweisskraft der zweiten Schweissung in Abhängigkeit von dem mindesten einen erfassten Schweissparameter eingestellt wird.

2. Verfahren nach Anspruch 1, **dadurch gekennzeichnet, dass** anschliessend an die erste Schweissung mit ersten Schweissrollen (10, 11) einer Schweissmaschine die zweite Schweissung in derselben Schweissmaschine mit zweiten Schweissrollen (20, 21) der Schweissmaschine erfolgt.

3. Verfahren nach Anspruch 2, **dadurch gekennzeichnet, dass** die von den ersten Schweissrollen geschweisste Behälterzarge beim Austritt aus den ersten Schweissrollen (10, 11) von den zweiten Schweissrollen (20, 21) erfasst wird.

4. Verfahren nach Anspruch 2, **dadurch gekennzeichnet, dass** die von den ersten Schweissrollen geschweisste Behälterzarge von einem Transportmittel (25) erfasst und von diesem zu den zweiten Schweissrollen transportiert wird.

5. Verfahren nach einem der Ansprüche 1 bis 4, **dadurch gekennzeichnet, dass** als Schweissparameter die Schweissnahttemperatur erfasst wird.

6. Verfahren nach einem der Ansprüche 1 bis 4, **dadurch gekennzeichnet, dass** als Schweissparameter der Energiewert aus dem Spannungsabfall zwischen den ersten Schweisselektroden und dem Schweissstrom erfasst wird.

7. Verfahren nach einem der Ansprüche 1 bis 4, **dadurch gekennzeichnet, dass** zwei Schweissparameter erfasst werden, wobei als ein erster Schweissparameter die Schweissnahttemperatur erfasst wird und als ein zweiter Schweissparameter der Energiewert aus dem Spannungsabfall zwischen den ersten Schweisselektroden und dem Schweissstrom erfasst wird, und wobei die Schweisskraft der zweiten Schweisselektroden in Abhängigkeit von beiden Schweissparametern eingestellt wird.

8. Verfahren nach einem der Ansprüche 1 bis 7, **dadurch gekennzeichnet, dass** elektrolytisch verchromtes Stahlblech (ECCS; Electrolytically Chromium Coated Steel) geschweisst wird.

9. Verfahren nach einem der Ansprüche 1 bis 8, **dadurch gekennzeichnet, dass** die Schweisskraft bei der zweiten Schweissung in Abhängigkeit von dem erfassten Schweissparameter geringer eingestellt wird als bei der ersten Schweissung oder gleich wie bei der ersten Schweissung oder höher als bei der ersten Schweissung.

10. Verfahren nach einem der Ansprüche 1 bis 9, **dadurch gekennzeichnet, dass** die Einstellung der zweiten Schweisskraft in Abhängigkeit vom erfassten Schweissparameter durch eine Reihe von Testzargen ermittelt wird, die mit erster und zweiter Schweissung geschweisst und danach visuell und mechanisch auf deren Schweissnahtqualität geprüft werden.

11. Rollnahtschweissvorrichtung (1) mit Schweissrollen (10, 11), einer Transporteinrichtung (9) und einer Kalibriereinrichtung (8) zur Zuführung von Behälterzargenrohlingen (3- 7) mit überlappend oder auf Stoss positionierten Kanten zu den Schweissrollen der Vorrichtung und mit einer Steuerung (15, 16), welche bei der Schweissung einer Behälterzarge zur Erfassung und Auswertung mindestens eines für die Qualität der erzeugten Schweissnaht relevanten Schweissparameters ausgestaltet ist, **dadurch gekennzeichnet, dass** die Schweissvorrichtung einen zweiten Satz von Schweissrollen (20, 21) aufweist, welcher in Richtung des Behälterzargentransports auf die ersten Schweissrollen folgt, und dass die Steuerung (15, 16) dazu ausgestaltet ist, die Schweisskraft des zweiten Satzes von Schweissrollen für eine Behälterzarge in Abhängigkeit von dem erfassten Schweissparameter einzustellen.

12. Rollnahtschweissvorrichtung nach Anspruch 11, **dadurch gekennzeichnet, dass** diese derart ausgestaltet ist, dass die von den ersten Schweissrollen geschweisste Behälterzarge beim Austritt aus den ersten Schweissrollen (10, 11) von den zweiten Schweissrollen (20, 21) erfassbar ist.

13. Rollnahtschweissvorrichtung nach Anspruch 11, **dadurch gekennzeichnet, dass** diese ein Transportmittel (25) aufweist, das zur Erfassung der von den ersten Schweissrollen geschweissten Behälterzarge und zu deren Transport zu den zweiten Schweissrollen ausgestaltet ist.

14. Rollnahtschweissvorrichtung nach einem der Ansprüche 11 bis 13, **dadurch gekennzeichnet, dass** diese zur Erfassung der Schweissnahttemperatur als Schweissparameter ausgestaltet ist.

15. Rollnahtschweissvorrichtung nach einem der Ansprüche 11 bis 13, **dadurch gekennzeichnet, dass** diese zur Erfassung des Energiewerts aus dem Spannungsabfall zwischen den ersten Schweisselektroden und dem Schweissstrom als Schweissparameter ausgestaltet ist.

16. Rollnahtschweissvorrichtung nach einem der Ansprüche 11 bis 13, **dadurch gekennzeichnet, dass** diese zur Erfassung von zwei Schweissparametern ausgestaltet ist, wobei als ein erster Schweissparameter die Schweissnahttemperatur erfassbar ist und als ein zweiter Schweissparameter der Energiewert aus dem Spannungsabfall zwischen den ersten Schweisselektroden und dem Schweissstrom erfassbar ist, und wobei von der Rollnahtschweissvorrichtung die Schweisskraft der zweiten Schweisselektroden in Abhängigkeit von beiden Schweissparametern einstellbar ist.

## Claims

1. Method for roll seam welding the overlapping or abutting edges of a sequence (2) of container body blanks (3 to 7), whereby a sequence of container bodies is formed, wherein at least one welding parameter that is relevant for the weld quality is detected and evaluated during the welding operation of a container body blank,
**characterized in that**
- on at least one container body (7) of the sequence of container bodies, the previously generated weld seam is subjected to a second welding operation,
- wherein the welding force of the second welding operation is set as a function of the at least one detected welding parameter.

2. Method according to claim 1, **characterized in that** the second welding operation is carried out in the same welding machine with second weld rolls (20, 21), subsequent to the first welding operation with first weld rolls (10, 11).

3. Method according to claim 2, **characterized in that** the container body welded by the first weld rolls is picked up by the second weld rolls (20, 21) upon exiting the first weld rolls (10, 11).

4. Method according to claim 2, **characterized in that** the container body welded by the first weld rolls is picked up by a transport means (25) and is transported by the same to the second weld rolls.

5. Method according to any one of claims 1 to 4, **characterized in that** the weld seam temperature is detected as a parameter.

6. Method according to any one of claims 1 to 4, **characterized in that** the energy value of the voltage drop between the first welding electrodes and the welding current is detected as a parameter.

7. Method according to any one of claims 1 to 4, **characterized in that** two parameters are detected, wherein the weld seam temperature is detected as a first parameter, and the energy value of the voltage drop between the first welding electrodes and the welding current is detected as a second parameter, and wherein the welding force of the second welding electrodes is set as a function of the two parameters.

8. Method according to any of claims 1 to 7, **characterized in that** Electrolytically Chromium Coated Steel (ECCS) is welded.

9. Method according to any of claims 1 to 8 **characterized in that** depending on the detected welding parameter the welding force of the second welding is set to be lower as during the first welding or is set to be equal as during the first welding or is set to be greater than during the first welding, respectively.

10. Method according to any of claims 1 to 9 **characterized in that** the setting of the second weld force is evaluated, depending on the detected weld parameter, by a series of test can bodies which are welded with first and second welding operation and which are afterwards examined visually and mechanically for weld seam quality.

11. Roll seam welding device (1), comprising weld rolls (10, 11), a transport unit (9) and a calibration unit (8) for feeding container body blanks (3 to 7) having overlapping or abutting edges to the weld rolls of the device, and comprising a control unit (15, 16), which is designed to detect and evaluate at least one welding parameter that is relevant for the quality of the generated weld seam during the welding operation of a container body, **characterized in that** the welding device comprises a second set of weld rolls (20, 21), which follows on the first weld rolls in the direction of the container body transport, and the control unit (15, 16) is designed to set the welding force of the second set of weld rolls for a container body as a function of the detected welding parameter.

12. Roll seam welding device according to claim 11, **characterized by** being designed in such a way that the container body welded by the first weld rolls is picked up by the second weld rolls (20, 21) upon exiting the first weld rolls (10, 11).

13. Roll seam welding device according to claim 11, **characterized by** comprising a transport device (25), which is designed to pick up the container body welded by the first weld rolls and transport the same to the second weld rolls.

14. Roll seam welding device according to any one of claims 11 to 13, **characterized by** being designed to detect the weld seam temperature as the parameter.

15. Roll seam welding device according to any one of claims 11 to 13, **characterized by** being designed to detect the energy value of the voltage drop between the first welding electrodes and the welding current as the welding parameter.

16. Roll seam welding device according to any one of claims 11 to 13, **characterized by** being designed to detect two parameters, wherein the weld seam temperature can be detected as a first parameter, and the energy value of the voltage drop between the first welding electrodes and the welding current can be detected as a second parameter, and wherein the roll seam welding device can set the welding force of the second welding electrodes as a function of the two parameters.

## Revendications

1. Procédé pour le soudage à la molette des bordures chevauchantes ou d'aboutement d'une séquence (2) de corps de récipient bruts (3 à 7), une séquence des corps de récipient étant formée, au moins un paramètre de soudage qui est relevant pour la qualité de soudage étant détecté et évalué pendant l'opération de soudage d'un corps de récipient brut,
**caractérisé en ce**
- **que** le joint de soudage généré antérieurement est soumis à une deuxième opération de soudage sur au moins un corps de soudage (7) de la séquence des corps de soudage,
- la force de soudage de la deuxième opération de soudage étant fixée en fonction d'au moins un paramètre de soudage détecté.

2. Procédé selon la revendication 1, **caractérisé en ce que** la deuxième opération de soudage est effectuée dans la même machine de soudage avec des deuxième rouleaux de soudage (20, 21), après la première opération de soudage avec des premiers rouleaux de soudage (10, 11).

3. Procédé selon la revendication 2, **caractérisé en ce que** le corps de récipient soudé par les premiers rouleaux de soudage est prélevé par les deuxièmes rouleaux de soudage (20, 21) après être sorti des premiers rouleaux de soudage (10, 11).

4. Procédé selon la revendication 2, **caractérisé en ce que** le corps de récipient soudé par les premiers rouleaux de soudage est prélevé par un moyen de transport (25) et transporté par le même aux deuxièmes rouleaux de soudage.

5. Procédé selon l'une des revendications 1 à 4, **caractérisé en ce que** la température du joint de soudage est détecté comme paramètre.

6. Procédé selon l'une des revendications 1 à 4, **caractérisé en ce que** la valeur d'énergie de la chute de tension entre les premières électrodes de soudage et le courant de soudage est détectée comme paramètre.

7. Procédé selon l'une des revendications 1 à 4, **caractérisé en ce que** deux paramètres sont détectés, la température du joint de soudage étant détectée comme premier paramètre, et la valeur d'énergie de la chute de tension entre les premières électrodes de soudage et le courant de soudage étant détectée comme deuxième paramètre, et la force de soudage des deuxièmes électrodes de soudage étant fixée en fonction des deux paramètres.

8. Procédé selon l'une des revendications 1 à 7, **caractérisé en ce que** d'acier électrochromé (ECCS) est soudé.

9. Procédé selon l'une des revendications 1 à 8, **caractérisé en ce que** dépendant du paramètre de soudage détecté la force de soudage du deuxième soudage est fixée à être inférieure que pendant le premier soudage ou elle est fixée à être égale par rapport au premier soudage ou elle est fixée à être supérieure que pendant le premier soudage.

10. Procédé selon l'une des revendications 1 à 9, **caractérisé en ce que** la valeur de la deuxième force de soudage est évaluée, dépendant du paramètre de soudage détecté, par une série de corps de récipient de test qui sont soudés avec la première et la deuxième opération de soudage et qui sont ensuite examinés visuellement et mécaniquement **en ce que** concerne la qualité du joint de soudage.

11. Dispositif de soudage à molette (1), comprenant des rouleaux de soudage (10, 11), une unité de transport (9) et une unité de calibration (8) pour alimenter des corps de récipient bruts (3 à 7) ayant des bordures chevauchantes ou d'aboutement aux rouleaux de soudage du dispositif, et comprenant une unité de commande (15, 16) prévue pour détecter et évaluer au moins un paramètre de soudage qui est relevant pour la qualité du joint de soudage généré pendant l'opération de soudage d'un corps de récipient,
caractérisé en ce le dispositif de soudage comprend un deuxième set de rouleaux de soudage (20, 21) qui suit les premiers rouleaux de soudage en direction du transport des corps de récipient, et l'unité de commande (15, 16) est prévue pour fixer la force de soudage du deuxième set de rouleaux de soudage pour un corps de récipient en fonction du paramètre de soudage détecté.

12. Dispositif de soudage selon la revendication 11, **caractérisé en ce qu'**il est formé de sorte que le corps de récipient soudé par les premiers rouleaux de soudage soit prélevé par les deuxièmes rouleaux de soudage (20, 21) après être sorti des premiers rouleaux de soudage (10, 11).

13. Dispositif selon la revendication 11, **caractérisé en ce qu'**il comprend un dispositif de transport (25) adapté à prélever le corps de récipient soudé par les premiers rouleaux de soudage et de transporter le même aux deuxièmes rouleaux de soudage.

14. Dispositif selon l'une des revendications 11 à 13, **caractérisé en ce qu'**il est adapté à détecter la température du joint de soudage comme paramètre.

15. Dispositif selon l'une des revendications 11 à 13, **caractérisé en ce qu'**il est adapté à détecter la valeur d'énergie de la chute de tension entre les premières électrodes de soudage et le courant de soudage comme paramètre de soudage.

16. Dispositif selon l'une des revendications 11 à 13, **caractérisé en ce qu'**il est adapté à détecter deux paramètres, la température du joint de soudage étant détectée comme premier paramètre, et la valeur d'énergie de la chute de tension entre les premières électrodes de soudage et le courant de soudage pouvant être détectée comme deuxième paramètre, et que le dispositif de soudage à molette peut fixer la force de soudage des deuxièmes électrodes de soudage en fonction des deux paramètres.
